# EUROPEAN PATENT SPECIFICATION

(11) **EP 1 556 608 B1**
(45) Date of publication and mention of the grant of the patent: **22.03.2006**
(21) Application number: 03750383.6
(22) Date of filing: 03.10.2003
(51) Int. Cl.: F02M 61/18, B22F 3/15, B05B 1/14

(54) **A NOZZLE FOR A FUEL VALVE IN A DIESEL ENGINE, AND A METHOD OF MANUFACTURING A NOZZLE**
Einspritzdüse für Kraftstoffventil in einem Dieselmotor und Herstellungsverfahren für eine Einspritzdüse
BUSE POUR CLAPET A CARBURANT DANS UN MOTEUR DIESEL ET PROCEDE DE FABRICATION D'UNE BUSE

(30) Priority: 07.10.2002 DK 200201498
(43) Date of publication of application: 27.07.2005
(73) Proprietor: MAN B & W Diesel A/S, 2450 Copenhagen SV (DK)
(72) Inventor: HOEG, Harro, Andreas, 3450 Allerod (DK)
(74) Representative: Indahl, Peter Jensen
(86) International application number: PCT/DK2003/000657
(87) International publication number: WO 2004/031571

(56) References cited:
- EP-A- 0 982 493
- DE-A- 10 042 956

## Description

The present invention relates to a nozzle for a fuel valve in a diesel engine, particularly a two-stroke crosshead engine, having a central, longitudinal channel communicating with a number of nozzle bores, the nozzle being composed of a central member with a lower section and of a jacket, the jacket and the central member being brazed together, the jacket enclosing at least the lower section of the central member with nozzle bores.

DE 100 42 956 describes such a nozzle in which a jacket of a ceramic material is brazed or friction-welded onto the outer surface of the central member, which is of a metallic material. In this known nozzle, the jacket is an insulating jacket reducing the heat influence on the metallic material. The insulating ceramic material is relatively brittle, which causes the risk that small pieces of ceramic material break off in the areas around the nozzle holes, where the nozzle has a complex geometry.

EP 0 982 493 A1 describes a fuel valve with a nozzle extending far up into the valve housing past the primary valve seat and onwards past the slider guide. These parts of the fuel valve are made of steel to give the valve seat, etc., suitable hardness. The lowermost part of the nozzle is provided with a corrosion-protective coating by means of laser welding, plasma welding or powder spraying, whereby fully or partially melted material bonds to the steel in a mixing area. The material in the mixing area has properties that may cause the corrosion-resistant alloy to flake off after a certain period of operation. In operation, the nozzle is exposed to strong thermal, cyclical loads causing a risk of degradation of the adhesion of the corrosion-resistant alloy.

In the context of the present invention the words braze and brazing are to be understood in a broad sense to cover also solder and soldering, and without being restricted to the use of any particular braze or brazing material. Braze and brazing are consequently not to be taken as indicating only high temperature melting materials which are activated at temperatures above 450°C, but applies also to materials activated below 450°C.

It is an object of the present invention to provide a nozzle with an advantageously long life.

In view of this, the first-mentioned nozzle according to the invention is characterized in that the jacket is made of a corrosion-resistant alloy, and that the central member is made of an iron-based alloy with a fatigue strength σ_{A} of at least ± 500 MPa.

Using an alloy as the jacket material instead of a ceramic material makes it possible to obtain a suitable ductility of the jacket material, which counteracts the breaking-off of material. Moreover, the corrosion-resistant alloy makes the jacket material able to withstand the temperature influences. Compared with the use of insulating ceramic material, the use of the alloy provides the advantage of a lower operating temperature of the nozzle on the surface of the jacket. The reason is that the not very insulating alloy will conduct a larger proportion of the heat deposited in the jacket material inwards to the colder, central member, from which the heat is delivered to the fuel injected into the engine combustion chamber.

As the jacket is manufactured as a separate blank before the brazing, the corrosion-resistant alloy in the jacket has advantageously uniform properties judged in relation to material applied by welding, which typically both exhibits variations in the alloy composition and may cause microcracks in the area affected by the heat at the welding. The advantageous properties of the jacket are retained at the brazing, which provides a mechanically or geometrically conditioned locking of the jacket in relation to the central member without the material-changing melting and/or heat influence of the boundary areas which is known from the welding on of a coating. The joining by means of brazing contributes in itself to an extension of the nozzle life, as there are no microcracks in the brazing area, and further makes it possible to obtain a further extension of the nozzle life by use of a material with a higher fatigue strength. The life of the nozzle is substantially extended because the central member is made of an iron-based alloy with a fatigue strength σ_{A} of at least ± 500 MPa. Generally, the iron-based alloy used for the central member provides high strength in the area of the nozzle having a complex geometry because a number of nozzle bores located within a small area have been cut into the central, longitudinal channel at different angles.

The reason why the fatigue strength is of particular importance to the nozzle life is that, in addition to the conventional thermally based loads on the nozzle, a considerable increase in the fatigue loads is expected as a consequence of the use of higher injection pressures and faster pressure variations than applied so far in order to obtain more accurate control of the injection and thus better combustion of the fuel and reduced formation of polluting compounds.

Opposite each nozzle hole in the central member described in the above publication, DE 100 42 956, the jacket has a conical hole with a substantially larger diameter than the nozzle hole. This means that in the areas around the nozzle holes the surface of the central member is influenced both by the heat and the corrosive combustion products in the combustion chamber. In one embodiment according to the present invention, the nozzle bores in the transitional area between the central member and the jacket have substantially the same diameter in the jacket as in the central member. This means, firstly, that the material in the central member is completely covered by the corrosion-resistant alloy of the jacket so that the corrosive combustion products are prevented from access to degrading the iron-based alloy of the central member. Secondly, the jacket constitutes an actual part of the nozzle holes so that the cold fuel flows closely along the surface of the jacket material and cools it all the way to the outer surface of the jacket, where the largest heat influence occurs. This results in a drop of the temperature of the jacket material around the nozzle holes and thus in a substantially lower operating temperature in the sensitive transitional areas of the nozzle holes between the central member and the jacket.

Preferably, the corrosion-resistant alloy is a nickel-based alloy, as these alloys are shown by experience to have good properties in the aggressive environment prevailing in the combustion chambers of diesel engines. Applicable alternatives to nickel-based alloys are cobalt-based alloys, such as Stellite.

In a suitable embodiment, the brazing material located between the jacket and the central member is made of a nickel-based alloy. Nickel-based brazing material allows good adaptation of the brazing temperature to the temperature conditions occurring at heat treatment of nozzles according to the invention and occurring at operation in the engine. Furthermore, the nickel-based alloy in the joining surface functions well together with the nickel-based corrosion-resistant alloys.

The jacket may be manufactured by powder metallurgy, for example in the form of a sintered blank or from powder brazed together. In one embodiment, the whole jacket or part of the jacket is made of cast or wrought material, which combines good and uniform material properties with relatively low manufacturing costs for the jacket.

The nozzle is suitably designed as a separate unit located in the fuel valve in continuation of a spindle guide containing the primary valve seat of the fuel valve. With this design, the nozzle is not or only to a minimum extent influenced by the rather large stresses occurring at the primary valve seat. At nozzle replacement, the replacement is also limited to a smaller part mainly consisting of the piece of the fuel valve that projects into the combustion chamber.

It may be desirable to use a brazing material which contains a component that may react with undesired compounds with the adjoining materials in the jacket or the central member, or it may be desirable to obtain a more efficient separation of the adjoining materials than the separation obtainable with the brazing material. In these cases it may be an advantage to design the nozzle so that the inner surface of the jacket and/or the outer surface of the central member is/are provided with a diffusion barrier. Such diffusion barrier may, for example, be nickel, copper, a nickel alloy or a copper alloy, as both nickel and copper are suitable for forming a dense and stable coating. Alternatives may be a cobalt coating, a cobalt alloy or a chromium coating. Particularly preferred is electrolytically deposited nickel, which forms a very dense coating with good strength properties and a relatively high melting point in relation to the brazing materials used. The diffusion barrier prevents or restricts the diffusion of, in particular, small elements such as C, boron and silicon so that they do not diffuse from an alloy or a brazing material with a higher content of the element in its free form into an alloy with a lower content of the element.

For further improvement of the nozzle life of nozzles subjected to particularly high loads, the central member may have a fatigue strength σ_{A} of at least ± 750 MPa.

In one embodiment an insulating piece of ceramic material is located inside the end bottom of the jacket below the end of the central, longitudinal channel, the lower surface of the insulating piece being completely covered by the corrosion-resistant alloy of the jacket. The insulating ceramic material is encapsulated by the jacket material and is thus protected from the corrosive influences from the combustion chamber. Moreover, the ceramic material is located at the jacket bottom in an area where the stress level in general and particularly the fatigue loads are relatively low. With this location and insulation from the combustion chamber it is possible to exploit the advantages of shielding the superposed nozzle sections from the greatest heat influences without any substantial negative influence on the nozzle properties caused by the use of a ceramic material.

In another aspect, the present invention relates to a method of manufacturing a nozzle for a fuel valve in a diesel engine, particularly a two-stroke crosshead engine, having a central, longitudinal channel communicating with a number of nozzle bores, a central member with a lower section being brazed together with a jacket which encloses at least the lower section of the central member. In view of obtaining longer nozzle life, the method according to the invention is characterized in that the jacket material used is a corrosion-resistant alloy, that an iron-based alloy with a fatigue strength σ_{A} of at least ± 500 MPa is used for the central member, and that the central member and the jacket are brazed together by means of vacuum brazing. Concerning the advantages of using a jacket of a corrosion-resistant alloy brazed to a central member made of an alloy with a fatigue strength of at least ± 500 MPa, please see the above description in connection with the nozzle according to the first aspect of the invention. Use of vacuum brazing provides the supplementary advantages, among others, that the jacket and the central member as well as the brazing material are not oxidized during the brazing, nor is the risk of air pocket formation in the material relevant. Moreover, the temperature in the vacuum furnace can be changed advantageously fast so that the period at the brazing temperature and the actual brazing temperature are accurately controlled.

In a further development of the method, the vacuum brazing is carried out during a hardening heat treatment. With this combined brazing and hardening it is possible to avoid carrying out a special heat treatment for the brazing. Moreover, a particular advantage is obtained in connection with the manufacture of nozzles in small series, such as from 10 to 200 nozzles per series. The heat treatment is normally carried out at special workshops which may have a specified production run planned several weeks in advance. In such a workshop, hardening is typically carried out every day, while special heat treatments are only carried out at rather long intervals. By carrying out the brazing at the same time as the hardening at the usual hardening temperatures, the small series may be heat treated from day to day, as the nozzles can always, due to their small size, find space for heat treatment in the furnace together with the other objects planned for heat treatment already.

In connection with the combined treatment, the manufacturing steps of the nozzle are preferably planned so that the central member and the jacket are put together and fixed in relation to each other, whereupon the nozzle bores are provided, whereupon the combined vacuum brazing and hardening is carried out. Although this method requires mutual fixing of the jacket and the central member to be able to maintain the coaxiality of the holes in the jacket and the central member until the brazing has been carried out, this will normally be preferable to having to carry out the more time-consuming spark machining of the nozzle holes into the hardened central member. The mutual fixation may, for example, be performed by means of mechanical locking, for example in the form of a short thread on the central member and the jacket, or by pressing one or more pins into the space between the central member and the jacket, or possibly by gluing at discrete points between the jacket and the central member.

An alternative to the combined treatment is a treatment sequence in which the vacuum brazing of the central member and the jacket is carried out and the nozzle bores are provided in the brazed-together nozzle, whereupon the nozzle is hardened. In this method the brazing is carried out as an independent heat treatment bonding the nozzle parts together into a unit, before the nozzle holes are machined into the still unhardened nozzle, which provides faster machining. If the brazing temperature is above the austenitizing temperature of the central member, the cooling from the brazing temperature to the machining temperature is carried out so suitably slowly that no hardening takes place to any noticeable extent at this cooling. When the nozzle machining is finished, the hardening is carried out in a separate heat treatment.

When the hardening is carried out in a separate heat treatment after the brazing, the brazing material applied for the vacuum brazing is preferably a brazing material the brazing temperature of which is higher than the hardening temperature applied for the hardening. This provides the advantage that the brazing material cannot become liquid at the hardening, which might otherwise give rise to a need for refinishing.

After brazing and hardening, tempering is preferably carried out to adjust the properties of the nozzle material, including the fatigue strength of, particularly, the iron-based material.

It is possible to use particulate material for the manufacture of the jacket, and in that case the whole jacket or part of the jacket material is preferably provided by placing the central member with the lower section facing upwards, a tubular holder is placed on the central member, the particulate material is filled into the holder, brazing material is placed above the powder, and the brazing is carried out, whereby the powder is brazed together into jacket material. The advantage of this is that a simple pipe section can be used as a holder instead of a jacket blank machined into a thimble-like shape with the internal geometry that matches the outer geometry of the central member.

The invention will now be described in more detail below with reference to the highly schematic drawing, in which
Fig. 1 is a longitudinal sectional view through a nozzle mounted in a roughly outlined example of the lower end of a fuel valve,
Fig. 2 is a sectional view through nozzle parts of a nozzle before brazing,
Fig. 3 shows a section through the nozzle of Fig. 2 after brazing and machining of a nozzle hole,
Fig. 4 is a sectional view corresponding to that of Fig. 2 of another example of nozzle parts prepared for brazing,
Figs. 5 and 6 show a third example of nozzle parts before and after brazing,
Fig. 7 shows a fourth example of nozzle parts before brazing, and
Fig. 8 shows a further embodiment with encapsulated insulating-material.

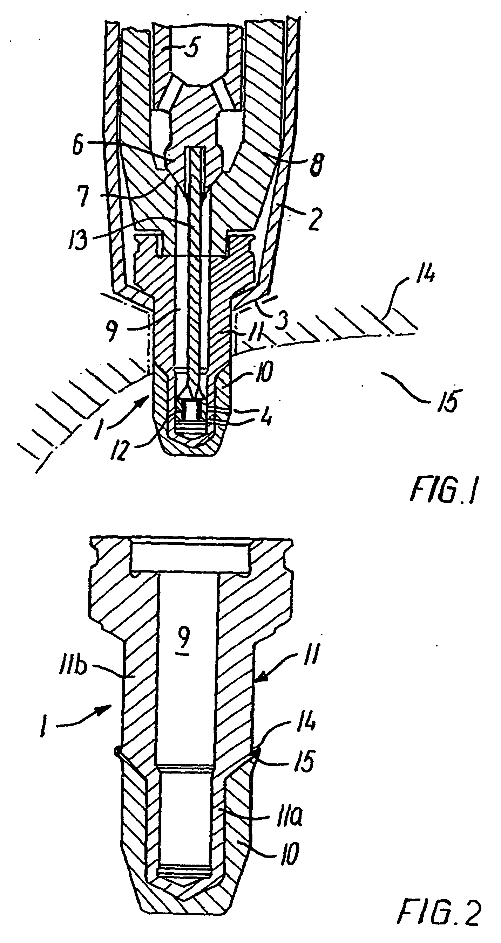

Fig. 1 shows a nozzle, generally designated 1, of a fuel valve in an internal combustion engine, which may be a four-stroke engine, but is preferably a two-stroke crosshead engine with more than one fuel valve on each cylinder. The latter engine typically makes strict demands on the longevity of the nozzle, among other reasons because the engines are often operated on heavy fuel oil, which may even contain sulphur.

The nozzle projects out through a central hole at the end of a valve housing 2, the annular surface 3 of which may be pressed against a corresponding abutment surface in a cylinder cover 14 so that the tip of the nozzle with nozzle holes 4 projects into the combustion chamber 15 of the cylinder and can inject fuel when the fuel valve is open. The fuel valve has a valve slider 5 with a valve needle 6 and a valve seat 7 located, in the valve design shown, in the lower end of a slider guide 8. The slider guide is pressed down against an upwardly facing surface on the nozzle 1. The valve needle may carry a secondary closing member 12 in the form of a ring which is screwed into a bore in the valve nose 7 via a relatively long and thin shaft 13 or is otherwise mounted therein. Such a secondary closing member for rapid closing of the nozzle holes at the end of the atomization is well-known in connection with nozzles for large two-stroke crosshead engines. The secondary closing member may advantageously be made of tool steel, as it slides along the inner surface of the longitudinal channel, which may also be made of tool steel. This is a utilization of the fact that two tool steels run well along each other.

The nozzle according to the present invention can also be used for fuel valves which have no such secondary closing member and for fuel valves in which the primary valve seat is located down in the nozzle, resulting in a minimum volume in the fuel channel below the valve seat. It is moreover possible that the nozzle bores are directed not only to one side of the nozzle, but instead to both one and the other side or dispersed along the whole circumference of the nozzle.

The nozzle has a central, longitudinal channel 9, from which the nozzle holes 4 lead out to the outer surface of the nozzle. The nozzle is composed of a jacket 10 made of a corrosion-resistant alloy and of a central member 11 made of an iron-based alloy. The jacket 10 constitutes at least the outermost area of the nozzle in the area around the nozzle holes and may extend upwards and constitute the outer surface of the nozzle over the whole part of the nozzle that projects from the valve housing 2.

The jacket 10 made of the corrosion-resistant alloy may be made from a particulate starting material, but preferably it is made of cast or wrought material. Examples of applicable alloys for use as jacket material may be nickel-based alloys which may, for example, by weight% and apart from generally occurring impurities, comprise from 15 to 30% Cr, from 0.02 to 0.55% C and optionally one or more of the following components: from 0 to 15% W, from 0 to 8% Al, from 0 to 5% Ti, from 0 to 20 % Co, from 0 to 2% Hf, from 0 to 5% Nb and/or Ta, from 0 to 35% Mo, from 0 to 10% Si, from 0 to 1.5% Y and from 0 to 20% Fe. The alloy may contain unavoidable impurities, and the remainder is nickel.

An example of such an alloy has the following analysis: 23% Cr, 7% W, 5.6% Al, 1% Si, 0.5% C and 0.4% Y. This alloy may, for example, have a fatigue strength σ_{A} in the interval from ± 350 MPa to ± 440 MPa.

The nickel-based alloys may also be of the type which, by weight% and apart from generally occurring impurities, comprises from 35 to 60% Cr, from 0.02 to 0.55% C and optionally one or more of the following components: from 0 to less than 1.0% Si, from 0 to 5.0% Mn, from 0 to 5.0% Mo and/or W, from 0 to less than 0.5% B, from 0 to 8.0% Al, from 0 to 1.5% Ti, from 0 to 0.2% Zr, from 0 to 3.0% Nb, from 0 to a maximum of 2% Hf, from 0 to a maximum of 1.5% Y, from 0 to 1% N and an aggregate content of from 0 to a maximum of 5.0% Co and Fe. The alloy may contain unavoidable impurities, and the remainder is Ni. This material has a high fatigue strength and extremely high resistance to both hot corrosion and erosion influences from the fuel.

Other examples of alloys for the jacket material are stated in Table 1.

**Table 1:**

| Alloy | Approximate analysis (weight%) and apart from generally occurring impurities | Thermal expansion coefficient (10⁻⁶/°C) |
|---|---|---|
| Inconel 625 | 0.1%C 22%Cr 9%Mo 3.5%Nb 0.4%Al 0.4%Ti, remainder Ni | 13.9 |
| Inconel 617 | 0.07%C 22%Cr 12.5%Co 9%Mo 1.2%Al 0.6%Ti, remainder Ni | 13.8 |
| Inconel 725 | 0.03%C 21%Cr 8%Mo 3.5%Nb 1.4%Ti, 9%Fe, remainder Ni | 14.1 |
| Inconel 657 | 0.1%C 50%Cr 1.5%Nb, remainder Ni | 13.4 |
| Hastelloy B2 | 0.01%C 28%Mo 1%Cr 2%Fe 1%Co, remainder Ni | 11.6 |
| Hastelloy G30 | 0.03%C 30%Cr 15%Fe 5%Co 5.5%Mo, 1.5%Nb 2%Cu 2.5%W, remainder Ni | 15.2 |

The thermal expansion coefficient is stated above as the average linear thermal expansion coefficient for heating from 20°C to 500°C, that is, it is relevant for 500°C. Preferably the jacket material has a higher thermal expansion coefficient than the central member so that the braze gap grows at heating. This results in the occurrence of compression stresses in the central member in connection with the cooling from the brazing temperature to 20°C. If the jacket material has a lower thermal expansion coefficient than the material of the central member, the jacket and the central member should be so adapted to each other that the gap between the two parts is larger at 20°C than the desired brazing gap.

It is also possible to use cobalt-based alloys, such as Celsit 50-P, but they have lower fatigue strengths σ_{A} of less than ± 150 MPa, for which reason they are not preferred materials.

Alloy materials to be used for the central member 11 of the nozzle may be iron-based alloys, preferably of the tool steel type. The central member may be made by conventional methods for tool steel or may be an ESR (Electro Slag Refined) recasting. The central member may, for example, be wrought or otherwise deformed, such as extruded. Examples to be mentioned are the tool steel AISI H13 with the analysis 0.4% C, 1.0% Si, 0.4% Mn, 5.2% Cr, 1% V, 1.3% Mo and the remainder Fe, or the tool steel AISI H19 with the analysis 0.45% C, 0.4% Si, 0.4% Mn, 4.5% Co, 4.5% Cr, 0.5% Mo, 2% V, 4.5% W and the remainder Fe, or the tool steels CPM1V and CPM3V from Crucible Research, U.S.A., made by powder metallurgy possibly with subsequent extrusion or working, CPM1V containing 0.5% C, 4.5% Cr, 1% V, 2.75% Mo, 2% W, 0 .4% Si, 0.5% Mn and the remainder Fe, and CPM3V containing 0.8% C, 7.5% Cr, 2.5% V, 1.3% Mo, 0.9% Si, 0.4% Mn and the remainder Fe.

Other examples of alloys for the central member are mentioned in Table 2, in which the thermal expansion coefficients are stated in the same way as in Table 1.

**Table 2:**

| Alloy | Approximate analysis (weight%) and apart from generally occurring impurities | Thermal expansion coefficient (10⁻⁶/°C) |
|---|---|---|
| AISI H11 | 0.4%C 5%Cr 1.3%Mo, 0.5%V, remainder Fe | 13.1 |
| AISI H21 | 0.3%C 3.5%Cr 9.5%W, 0.5%V, remainder Fe | 12.8 |
| AISI A8 | 0.5%C 5%Cr 1.4%Mo, 1.2%W, remainder Fe | 12.1 |
| AISI M2 | 0.9%C 4.3%Cr 5%Mo 6%W, 2%V, remainder Fe | 12.3 |
| AISI O1 | 0.9%C 0.5%Cr 0.5%W, remainder Fe | 13.3 |

The brazing may, for example, be carried out as described below. In the various embodiments and examples, the same reference numerals are used for members of the same type. A jacket 10 and a central member 11 are placed as shown in Fig. 2 with the jacket around the lower section of the central member. The jacket 10 is thimble-shaped and encloses all of the lower section 11a, which has a smaller outer diameter than the upper section 11b of the central member. The outer diameter of the lower section 11a is from 0 to 0.5 mm smaller than the internal diameter of the jacket so that there is a gap sized from 0 to 0.25 mm between the two surfaces, and the diameters are preferably so adapted to each other that the gap size is in the interval from 0.05 mm to 0.1 mm.

Brazing material 14 is placed in an annular path along the upper end of the jacket 10 in connection with the interface or the gap between the jacket and the central member 11. The brazing material may be placed in a small recess at the interface or, as shown in Fig. 2, above a small projecting collar 15 at the upper rim of the jacket. The collar 15 serves only to hold the brazing material before brazing and to direct the brazing material into the gap during brazing. After brazing the collar may be removed, for example by grinding.

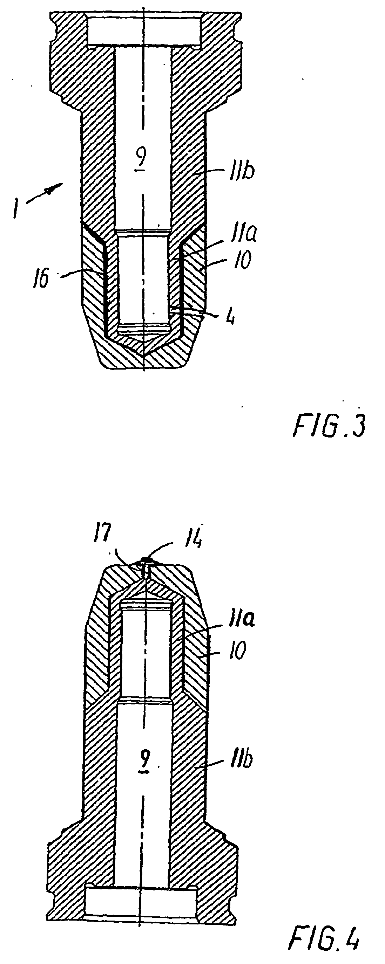

The nozzle blank is placed in a furnace and heated to the brazing temperature, at which the brazing material is sucked into the gap between the jacket and the central member by means of the capillary effect and wets their surfaces, whereupon the brazing material 16 solidifies and locks the surfaces to each other, see Fig. 3. The brazing temperature may, for example, be in the interval from 925°C to 1230°C. When the hardening takes place at a separate heat treatment, the brazing temperature is preferably in the interval from 1100°C to 1230°C.

The brazing material may, for example, be nickel braze with a content of Cr, Si or B. The relevant nickel brazes typically contain from 5 to 20% Cr, and/or from 4 to 10% Si and/or C, B or Cu. Examples are brazing materials from the firm of Wall Colmomoy Corporation, Madison Heights, Michigan, U.S.A. The brazing materials of this firm in the Nicrobraz series can be used, which makes it possible to choose a brazing material with a suitable brazing temperature and braze composition. Nicrobraz 30, for example, contains 19% Cr, 10.2% Si, a maximum of 0.06% C and the remainder Ni and has an approximate brazing temperature of 1190°C.

After brazing of the nozzle blank the external and internal geometries of the nozzle blank can be finished. This particularly means that the nozzle holes 4 can be machined into the blank, and the outer surface of the blank can also be turned or ground to its finished shape. Preferably, as shown in Fig. 3, the nozzle holes 4 have a constant diameter from the outer jacket surface to the area of the internal end of the nozzle holes in or at the central channel 9. The diameter of the nozzle holes may, for example, be in the interval from 0.5 mm to 1.5 mm.

When the geometric machining is finished, the nozzle blank may be hardened to a suitable hardness of the central member. The hardening may, for example, be carried out at a temperature in the interval from 1000°C to 1100°C with a soaking time of from 10 to 40 min. Then a final heat treatment is carried out in the form of one or more tempering treatments, which is of importance to the resulting fatigue strength of the finished nozzle. The tempering may, for example, be carried out with a soaking time of two hours at a temperature in the interval from 450°C to 600°C. Preferably, double or triple tempering is carried out with two or three periods of two hours in a vacuum furnace or in a furnace at normal pressure and with a special atmosphere, such as a reducing or inactive atmosphere.

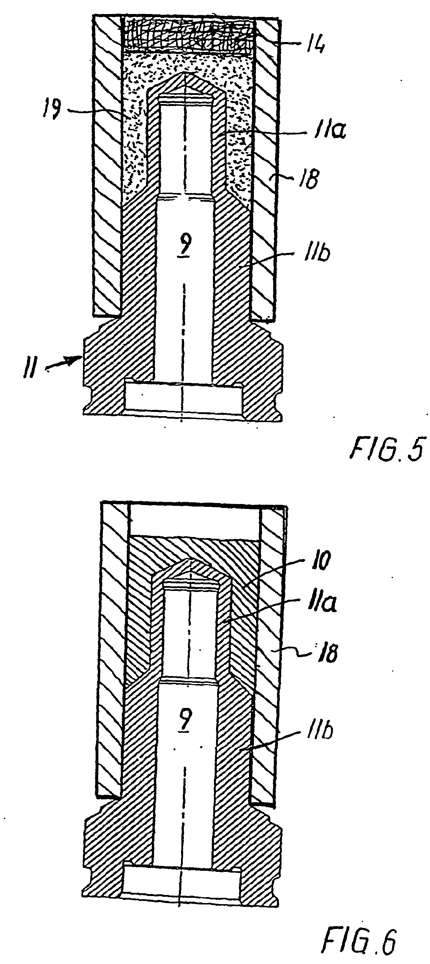

Fig. 4 shows an alternative location of the brazing material 14 before the brazing is carried out. The brazing material 14 is here placed on top of a channel 17, which leads in through the upwardly facing end of the jacket 10 to the interface between the jacket and the central member. The brazing material may be surrounded by a small annular projection to prevent the brazing material from running away during brazing.

It is also possible to carry out the brazing concurrently with the hardening, and in that case the brazing material preferably has a brazing temperature in the interval from 925°C to 1100°C, and suitably from 1000°C to 1100°C. After placing the jacket on the central member and arranging the brazing material 14, the blank is placed in a furnace, which is evacuated and heated to the hardening temperature, which may, for example, last for 30 min. at a temperature of 1025°C or last for 15 min. at a temperature of 1050°C.

For a particular tool steel, the fatigue strength is adjustable by means of the heat treatment given to the nozzle blank. The tool steels mentioned may have fatigue strengths σ_{A} of around ± 500 to 900 MPa in the finished nozzle. Preferably the fatigue strength σ_{A} is at least ± 750 MPa. At the same time the tool steels have advantageously high wear resistance and hardness.

Instead of manufacturing a jacket blank as shown in Fig. 2 with the thimble-like shape with an accurate internal geometry, the whole jacket or part of the jacket may be manufactured from a particulate starting material. This may be done by, for example as shown in Fig. 5, taking a cut-off pipe section and placing it like a holder 18 around the lower section 11a of the central member, which has been turned upwards in advance. Particulate starting material 19 is filled into the holder until the entire lower section 11a is covered, and the powder is lying at a suitable height above the tip of the lower section 11a. The powder may be mixed from several powder sizes, and it is also possible to use powder of several different metallic alloys, which may be of the types mentioned above as jacket material. It is furthermore possible to admix ceramic powder to obtain an insulating effect. The ceramic powder may, for example, be placed in a layer at a short distance above the tip of the lower section 11a and then be covered by the powder of the corrosion-resistant alloys. Graduated mixes of the various powders may also be used.

Above the powder, the brazing material 14 is placed in a sufficient quantity to bond the powder into a dense structure at the brazing. After the brazing, the holder 18 is located on the outer surface of the jacket 10 as shown in Fig. 6. The holder 18 is removed at the final finishing of the nozzle.

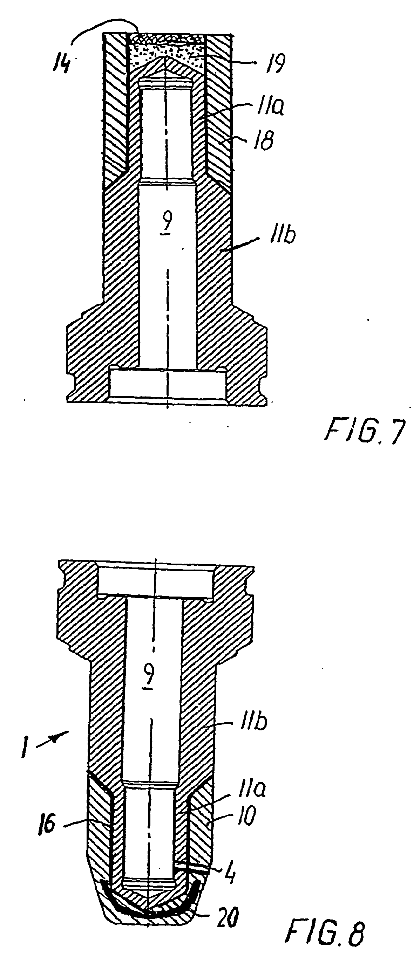

In another example the holder 18 is formed as a pipe of jacket material and is placed around the lower section 11a as shown in Fig. 7. The holder is here part of the jacket, and the powder only has to be filled in on top of the lower section 11a. With this design of the holder and the jacket; the need for refinishing is minimised.

Fig. 8 shows an embodiment in which the jacket contains an insulating piece of ceramic material 20 completely encapsulated in the jacket material. There may be, for example, at least 1 mm of jacket material on the outer surface of the ceramic material so that the corrosion resistance of the nozzle is not diminished.

If necessary, a diffusion barrier may be used. The barrier may be a coating, for example applied to the central member or the jacket by means of electrolytic deposition or by means of other surface application methods, such as plating. The barrier may, for example, be made of nickel, copper, cobalt or nickel-phosphorus. Alternatively, the coating may be applied by spraying. The barrier may, for example, have a thickness in the interval from 5 to 400 µm, preferably from 10 to 100 µm.

The nozzle may have other designs than the one shown in Fig. 1. Details of the various embodiments and examples may be combined into new embodiments.

## Claims

1. A nozzle for a fuel valve in a diesel engine, particularly a two-stroke crosshead engine, having a central, longitudinal channel communicating with a number of nozzle bores, the nozzle being composed of a central member with a lower section and of a jacket, the jacket and the central member being brazed together, the jacket enclosing at least the lower section of the central member with nozzle bores, **characterized in that** the jacket is made of a corrosion-resistant alloy, and that the central member is made of an iron-based alloy with a fatigue strength σ_{A} of at least ± 500 MPa.

2. A nozzle according to claim 1, **characterized in that** the nozzle bores in the transitional area between the central member and the jacket have substantially the same diameter in the jacket as in the central member.

3. A nozzle according to claim 1 or 2, **characterized in that** the corrosion-resistant alloy is a nickel-based alloy.

4. A nozzle according to any one of claims 1 to 3, **characterized in that** the brazing material located between the jacket and the central member is made of a nickel-based alloy.

5. A nozzle according to any one of claims 1 to 4, **characterized in that** the whole jacket or part of the jacket is made of cast or wrought material.

6. A nozzle according to any one of claims 1 to 5, **characterized in that** the nozzle is formed as a separate unit located in the fuel valve in continuation of a spindle guide containing the primary valve seat of the fuel valve.

7. A nozzle according to any one of claims 1 to 6, **characterized in that** the inner surface of the jacket and/or the outer surface of the central member is/are provided with a diffusion barrier, such as a layer of electrolytically deposited nickel.

8. A nozzle according to any one of claims 1 to 7, **characterized in that** the central member has a fatigue strength σ_{A} of at least ± 750 MPa.

9. A nozzle according to any one of claims 1 to 8, **characterized in that** an insulating piece of ceramic material is located inside the end bottom of the jacket below the end of the central, longitudinal channel, the lower surface of the insulating piece being completely covered by the corrosion-resistant alloy of the jacket.

10. A method of manufacturing a nozzle for a fuel valve in a diesel engine, particularly a two-stroke crosshead engine, having a central, longitudinal channel communicating with a number of nozzle bores, a central member with a lower section being brazed together with a jacket which encloses at least the lower section of the central member, **characterized in that** the jacket material used is a corrosion-resistant alloy, that an iron-based alloy with a fatigue strength σ_{A} of at least ± 500 MPa is used for the central member, and that the central member and the jacket are brazed together by means of vacuum brazing.

11. A method according to claim 10, **characterized in that** the vacuum brazing is carried out during a hardening heat treatment.

12. A method according to claim 11, **characterized in that** the central member and the jacket are put together and fixed in relation to each other, whereupon the nozzle bores are provided, whereupon the combined vacuum brazing and hardening is carried out.

13. A method according to claim 10, chara c t e r i z e d in that the vacuum brazing of the central member and the jacket is carried out and the nozzle bores are provided in the brazed-together nozzle, whereupon the nozzle is hardened.

14. A method according to claim 13, **characterized in that** the brazing material applied for the vacuum brazing is preferably a brazing material the brazing temperature of which is higher than the hardening temperature applied for the hardening.

15. A method according to any one of claims 10 to 14, **characterized in that** the nozzle is tempered after brazing and hardening, preferably by means of double or triple tempering.

16. A method according to any one of claims 10-15, **characterized in that** the whole jacket or part of the jacket material is provided by placing the central member with the lower section facing upwards, that a tubular holder is placed on the central member, that the particulate material is filled into the holder, that brazing material is placed above the powder, and that the brazing is carried out, whereby the powder is brazed together into jacket material.

## Patentansprüche

1. Düse für ein Kraftstoffventil in einem Dieselmotor, insbesondere einem Zweitaktkreuzkopfmotor, mit einem zentralen Längskanal, der mit einer Anzahl Düsenbohrungen verbunden ist, wobei die Düse von einem Mittelglied mit einem unteren Abschnitt und von einer Ummantelung gebildet wird, und wobei das Mittelglied und die Ummantelung miteinander verlötet sind und die Ummantelung zumindest den unteren Abschnitt des Mittelglieds mit Düsenbohrungen umhüllt, **dadurch gekennzeichnet, dass** die Ummantelung aus einer korrosionsbeständigen Legierung hergestellt ist und das Mittelglied aus einer eisenbasierten Legierung mit einer Dauerfestigkeit σ_{A} von zumindest ± 500 MPa.

2. Düse nach Anspruch 1, **dadurch gekennzeichnet, dass** die Düsenbohrungen im Übergangsbereich zwischen dem Mittelglied und der Ummantelung in der Ummantelung und im Mittelglied im wesentlichen den gleichen Durchmesser aufweisen.

3. Düse nach Anspruch 1 oder 2, **dadurch gekennzeichnet, dass** die korrosionsbeständige Legierung eine nickelbasierte Legierung ist.

4. Düse nach einem der Ansprüche 1 bis 3, **dadurch gekennzeichnet, dass** das Lot zwischen der Ummantelung und dem Mittelglied aus einer nickelbasierten Legierung hergestellt ist.

5. Düse nach einem der Ansprüche 1 bis 4, **dadurch gekennzeichnet, dass** die gesamte Ummantelung oder ein Teil der Ummantelung aus einem Guss- oder Schmiedematerial hergestellt ist.

6. Düse nach einem der Ansprüche 1 bis 5, **dadurch gekennzeichnet, dass** die Düse als eine separate Einheit ausgeformt ist, die in dem Kraftstoffventil in Weiterführung einer Achsführung angeordnet ist, welche den Hauptventilsitz des Kraftstoffventils aufnimmt.

7. Düse nach einem der Ansprüche 1 bis 6, **dadurch gekennzeichnet, dass** die Innenoberfläche der Ummantelung und/oder die Außenoberfläche des Mittelglieds eine Diffusionsbarriere aufweist/aufweisen, wie beispielsweise eine Schicht von elektrolytisch angelagertem Nickel.

8. Düse nach einem der Ansprüche 1 bis 7, **dadurch gekennzeichnet, dass** das Mittelglied eine Dauerfestigkeit σ_{A} von zumindest ± 750 MPa aufweist.

9. Düse nach einem der Ansprüche 1 bis 8, **dadurch gekennzeichnet, dass** ein isolierendes Stück Keramikmaterial im Endgrund der Ummantelung unterhalb des Endes des zentralen Längskanals angeordnet ist, wobei die untere Oberfläche des isolierenden Stücks vollständig von der korrosionsbeständige Legierung der Ummantelung bedeckt ist.

10. Verfahren zum Herstellen einer Düse für ein Kraftstoffventil in einem Dieselmotor, insbesondere in einem Zweitaktkreuzkopfmotor, mit einem zentralen Längskanal, der mit einer Anzahl Düsenbohrungen verbunden ist, und einem Mittelglied mit einem unteren Abschnitt, der mit einer Ummantelung verlötet ist, welche zumindest den unteren Abschnitt des Mittelglieds umhüllt, **dadurch gekennzeichnet, dass** das verwendete Ummantelungsmaterial eine korrosionsbeständige Legierung ist, dass für das Mittelglied eine eisenbasierte Legierung mit einer Dauerfestigkeit σ_{A} von zumindest ± 500 MPa verwendet wird, und dass das Mittelglied und die Ummantelung durch Vakuumlöten zusammengelötet sind.

11. Verfahren nach Anspruch 10, **dadurch gekennzeichnet, dass** das Vakuumlöten während einer Härtungsbehandlung ausgeführt wird.

12. Verfahren nach Anspruch 11, **dadurch gekennzeichnet, dass** das Mittelglied und die Ummantelung zusammengebracht werden und in Bezug zueinander befestigt werden, woraufhin die Düsenbohrungen erstellt werden, woraufhin das kombinierte Vakuumlöten und Härten ausgeführt wird.

13. Verfahren nach Anspruch 10, **dadurch gekennzeichnet, dass** das Vakuumlöten des Mittelglieds und der Ummantelung ausgeführt wird und die Düsenbohrungen in der zusammengelöteten Düse erstellt werden, woraufhin die Düse gehärtet wird.

14. Verfahren nach Anspruch 13, **dadurch gekennzeichnet, dass** das für das Vakuumlöten aufgebrachte Lot vorzugsweise ein Lötmaterial ist, dessen Löttemperatur höher als die für das Härten aufgebrachte Härtungstemperatur ist.

15. Verfahren nach einem der Ansprüche 10 bis 14, **dadurch gekennzeichnet, dass** die Düse nach dem Löten und Härten getempert wird, vorzugsweise durch Doppel- oder Dreifachtempern.

16. Verfahren nach einem der Ansprüche 10 bis 15, **dadurch gekennzeichnet, dass** die gesamte Ummantelung oder ein Teil der Ummantelung **dadurch** erstellt wird, dass das Mittelglied mit nach oben gerichtetem unteren Abschnitt angeordnet wird, dass ein röhrenförmiger Halter auf dem Mittelglied angeordnet wird, dass ein partikuläre Material in den Halter gefüllt wird, dass das Lot oberhalb des Pulvers angeordnet wird, und dass das Löten ausgeführt wird, wodurch das Pulver zu Ummantelungsmaterial zusammengelötet wird.

## Revendications

1. Buse pour injecteur de gazole dans un moteur diesel, en particulier un moteur à crosse à deux temps, ayant un canal longitudinal central communiquant avec un certain nombre de trous de la buse, la buse étant composée d'un élément central avec une partie inférieure et d'une chemise, la chemise et l'élément central étant fixés l'un à l'autre par brasage, la chemise enveloppant au moins la partie inférieure de l'élément central avec les trous de buse, **caractérisée en ce que** la chemise est en alliage résistant à la corrosion, et **en ce que** l'élément central est en alliage à base de fer à résistance à la fatigue σ_{A} d'au moins ± 500 MPa.

2. Buse selon la revendication 1, **caractérisée en ce que** les trous de buse dans la zone de transition entre l'élément central et la chemise ont sensiblement le même diamètre dans la chemise et dans l'élément central.

3. Buse selon la revendication 1 ou 2, **caractérisée en ce que** l'alliage résistant à la corrosion est un alliage à base de nickel.

4. Buse selon l'une quelconque des revendications 1 à 3, **caractérisée en ce que** la brasure située entre la chemise et l'élément central est en alliage à base de nickel.

5. Buse selon l'une quelconque des revendications 1 à 4, **caractérisée en ce que** la totalité de la chemise ou une partie de la chemise est en matière moulée ou forgée.

6. Buse selon l'une quelconque des revendications 1 à 5, **caractérisée en ce que** la buse constitue un élément séparé situé dans l'injecteur de gazole dans le prolongement d'un guide d'axe contenant le siège d'injecteur primaire de l'injecteur de gazole.

7. Buse selon l'une quelconque des revendications 1 à 6, **caractérisée en ce que** la surface intérieure de la chemise et/ou la surface extérieure de l'élément central est/sont munies d'une barrière empêchant la diffusion, par exemple une couche de nickel déposée par voie électrolytique.

8. Buse selon l'une quelconque des revendications 1 à 7, **caractérisée en ce que** l'élément central a une résistance à la fatigue σ_{A} d'au moins ± 750 MPa.

9. Buse selon l'une quelconque des revendications 1 à 8, **caractérisée en ce qu'**un morceau isolant de matière céramique est situé à l'intérieur du bas de l'extrémité de la chemise sous l'extrémité du canal longitudinal central, la surface inférieure de l'élément isolant étant entièrement couverte par l'alliage résistant à la corrosion de la chemise.

10. Procédé de fabrication d'une buse pour injecteur de gazole dans un moteur diesel, en particulier un moteur à crosse à deux temps, ayant un canal longitudinal central communiquant avec un certain nombre de trous de la buse et ayant en outre un élément central avec une partie inférieure fixée par brasage à une chemise qui englobe au moins la partie inférieure de l'élément central, **caractérisé en ce que** la matière utilisée pour la chemise est un alliage résistant à la corrosion, **en ce qu'**un alliage à base de fer à résistance à la fatigue σ_{A} d'au moins ± 500 MPa est utilisé pour l'élément central et **en ce que** l'élément central et la chemise sont fixés l'un à l'autre par brasage sous vide.

11. Procédé selon la revendication 10, **caractérisé en ce que** le brasage sous vide est réalisé pendant un traitement thermique de durcissement.

12. Procédé selon la revendication 11, **caractérisé en ce que** l'élément central et la chemise sont assemblés et fixés l'un à l'autre, à la suite de quoi les trous de la buse sont créés, puis le brasage sous vide et le durcissement combinés sont réalisés.

13. Procédé selon la revendication 10, **caractérisé en ce que** le brasage sous vide de l'élément central et de la chemise est réalisé et les trous de la buse sont créés dans la buse assemblée par brasage, à la suite de quoi la buse est durcie.

14. Procédé selon la revendication 13, **caractérisé en ce que** la brasure employée pour le brasage sous vide est de préférence une brasure dont la température de brasage est supérieure à la température de durcissement employée pour le durcissement.

15. Procédé selon l'une quelconque des revendications 10 à 14, **caractérisé en ce que** la buse subit un traitement de revenu après le brasage et le durcissement, de préférence par double ou triple revenu.

16. Procédé selon l'une quelconque des revendications 10 à 15, **caractérisé en ce que** la chemise toute entière ou une partie de la matière de la chemise est constituée en plaçant l'élément central avec la partie inférieure orientée vers le haut, **en ce qu'**un support tubulaire est placé sur l'élément central, **en ce que** la matière particulaire est amenée à remplir le support, **en ce que** la brasure est placée au-dessus de la poudre et **en ce que** le brasage est réalisé, à la suite de quoi la poudre est amalgamée par brasage à la matière de la chemise.
